(19) Europäisches Patentamt European Patent Office Office européen des brevets

(11) **EP 2 199 569 A1**

(12) **EUROPEAN PATENT APPLICATION**

(43) Date of publication:
**23.06.2010 Bulletin 2010/25**

(51) Int Cl.:
*F02C 3/30* (2006.01)  *F01K 21/04* (2006.01)

(21) Application number: **09179162.4**

(22) Date of filing: **15.12.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(30) Priority: **22.12.2008 US 341428**<br><br>(71) Applicant: **General Electric Company**<br>**Schenectady, NY 12345 (US)** | (72) Inventors:<br>• **Luthra, Krishnan Lal**<br>  **Niskayuna, NY 12309 (US)**<br>• **Spacil, Henry Stephen**<br>  **Seattle, WA 98126 (US)**<br><br>(74) Representative: **Szary, Anne Catherine**<br>**GE International Inc.**<br>**Global Patent Operation - Europe**<br>**15 John Adam Street**<br>**London**<br>**WC2N 6LU (GB)** |

(54) **System and method for operating a gas turbine using vanadium-containing fuels**

(57)  A method of operating a gas turbine that utilizes vanadium-containing fuels at a combustion stage of the turbine thereby producing a combustion product having vanadium gaseous species, the method comprising increasing the volatility of the vanadium gaseous species in the combustion product atmosphere generated in a combustor of the turbine by increasing concentration of water vapor in the combustion product.

FIG. 9

**Description**

BACKGROUND OF THE INVENTION

An embodiment of the invention relates to the operation of gas turbines. More specifically, embodiments of the invention relate to gas turbines that are operated using heavy fuels that contain vanadium and/or vanadium species.

Vanadium impurity concentrations in petroleum fuels range from less than 0.5 ppm in distillate fuels to as much as 200 ppm in residual fuels. Corrosion problems associated with liquid vanadium-containing deposits on turbine surfaces limit the use of the cheaper fuels. Present practice is to treat such fuels with magnesium additives which convert the vanadium impurities to solid magnesium vanadates resulting in solid, non-corrosive ash deposits on the blades.

Non-distillate fuels containing more than 2-3 ppm vanadium by weight can be burned in conventional gas turbines only if magnesium or calcium compounds are added to the fuel to form vanadates during combustion. While the liquid vanadium oxide ($V_2O_5$) and sodium vanadate ($NaVO_3$) that would otherwise be formed are highly corrosive to gas turbine hot stage materials at moderate temperatures and above, the alkaline earth vanadates (magnesium/calcium vanadates) are solid and result only in deposits within the turbine that are comparatively innocuous from a corrosion standpoint. Solid vanadate-containing deposits can be detrimental to gas turbine operation in other ways, however. First, the deposits decrease aerodynamic efficiency of turbine airfoils, leading to the necessity of periodic removal procedures ("nutshelling" while the turbine is hot, water washing when the turbine is cold). This problem becomes particularly severe for machines with higher firing temperature and high turbine component temperatures where the deposits are hard and difficult to remove by nutshelling and water washing.

Second, higher efficiency gas turbine with firing temperatures approaching 2300˚F depend upon nozzle and bucket cooling by injection of air across the surfaces of these parts (film cooling). Solid vanadate deposits can plug the air cooling ports and lead to overheating of the improperly cooled parts. Thus gas turbines capable of high efficiency operation on clean distillate fuels are generally de-rate for operation on vanadium-containing fuels. Despite these disadvantages, magnesium additives to the fuel are widely used as the only currently feasible approach to utilization of vanadium-containing fuels. No satisfactory method of removing vanadium from fuel prior to combustion has been found. It can be done by setting up or arranging refineries to create distillate fuel which may be complicated and expensive.

Vanadium occurs in the form of soluble porphyrin complex molecules in fuels, but after combustion it would be present in form of gaseous oxides and hydroxides. In most publications, vanadium oxides have been assumed to be the major vanadium containing species in the gas phase. *See,* W. D. Halstead, Deposition and Corrosion in Gas Turbines, J. Wiley, 1972, p. 22; W. D. Halstead, J. Inst. of Fuel, 42, (1969) 419; and N. S. Bornstein and M. A. DeCrescente, "Properties of High Temperature Alloys," The Electrochemical Society, Princeton, 1976, p. 626. However, combustion gases in gas turbines contain in excess of $3\%H_2O$, and at a first stage inlet pressure of greater than 10 atm., the water vapor pressure would be quite significant (> 0.3 atm.) resulting in appreciable concentrations of hydroxides. Volatile hydroxides reported in the literature include $V_2O_7H_4$, $VO(OH)_3$, $VO(OH)_2$ and $VO_2(OH)_2$. Glemser and Müller determined the vapor pressure of $V_2O_7H_4$ by transpiration experiments. *See,* O. Glemser and A. Müller, Z. Anorg. Allgem. Chem., 325, (1963) 220. These workers, however, did not demonstrate that their results were in a flow-rate independent region, a necessary experimental condition for equilibrium measurements. Yannoupoulos (912-1172˚K) and Taniguchi and Ooue (738-893˚K) reported $VO(OH)_3$ to be the predominant vanadium hydroxide while Suito and Gaskell (1173-1373˚K) reported $VO(OH)_2$ and $VO_2(OH)_2$ to be the major species. *See,* L. N. Yannoupoulos, J. Phys. Chem., 72, (1968) 3293; M. Taniguchi and M. Ooue, 23rd Annual Conf. of the Chem. Soc. of Japan, 1970 Preprint 2, p. 1112; and H. Suito and D. R. Gaskell, "Metal-Slag-Gas Reactions and Processes," The Electrochemical Society, Princeton, 1975, p. 251. There is a good agreement between the vapor pressure data of Yannoupoulos and Taniguchi and Ooue; the results of Yannoupoulos have been used for the thermodynamic calculations in this work.

BRIEF DESCRIPTION OF THE INVENTION

Disclosed herein are embodiments of the invention for a method of operating a gas turbine that utilizes vanadium-containing fuels. At a combustion stage of the turbine a combustion product having vanadium gaseous species is produced and may result in condensation of vanadium depositions on blades of the turbine. An embodiment of the invention comprises increasing the vapor pressure of the vanadium gaseous species in the combustion product atmosphere generated in the combustor of the turbine by increasing the water vapor pressure of the combustion product. Steam or water vapor may be introduced into the turbine component at location where deposition can occur and cause corrosion of the turbine components; or, the steam/water vapor may be introduced into the combustor. The steam/water vapor may be introduced at locations having moving items such as rotary blades and/or stationary components such as nozzles. Introduction of the steam/water vapor at predetermined temperatures and vapor pressures increases the volatility of the vanadium species. More specifically, vanadium oxide ($V_2O_5$) and sodium vanadate ($Na_2V_2O_5$) are oxidized in the presence of the steam/water vapor to form $VO(OH)_3$ and sodium hydroxide (NaOH) gases, which may not as readily condense on the turbine blades forming the solid vanadium depositions.

An embodiment of the invention may also be described as a gas turbine power generation system that comprises a water vapor source in fluid communication with the turbine element for the introduction of the water vapor into the turbine element and/or combustor to increase a vapor pressure of vanadium gaseous species in the combustion product. As noted above, increasing water vapor pressure results in an increase of the vanadium gas species vapor pressure, which may reduce the condensation of the vanadium gaseous species on to hot components of the turbine element. In an embodiment, the system may comprise a closed loop system that takes combustion product and steam (water vapor) exhausted from the turbine element, condenses the gases/vapors into liquid and cleans the liquid, which is then heated and introduced into the turbine element and/or combustor to increase the volatility of the vanadium gaseous species.

BRIEF DESCRIPTION OF THE DRAWINGS

A more particular description of the invention briefly described above will be rendered by reference to specific embodiments thereof that are illustrated in the appended drawings. Understanding that these drawings depict only typical embodiments of the invention and are not therefore to be considered to be limiting of its scope, the invention will be described and explained with additional specificity and detail through the use of the accompanying drawings:

FIG. 1 is a graph illustrating the effect of water vapor concentration on condensate ($Na_2V_2O_6$-$Na_2SO_4$-$V_2O_5$) composition.

FIG. 2 is a graph illustrating effect of water vapor concentration on fuel vanadium tolerance.

FIG. 3 is a schematic illustration representation of the experimental arrangement used for volatilization studies from pure $V_2O_5$.

FIG. 4 is a schematic illustration representation of the experimental arrangement used for volatilization studies from $Na_2V_2O_6$-$Na_2SO_4$-$V_2O_5$ melts.

FIG. 5 is a graph illustrating effect of flow rate of an $O_2$-$H_2O$ gas mixture on the apparent vapor density of $V_2O_5$,

FIG. 6 is a graph illustrating effect of $P_{H_2O}$ in $O_2$-$H_2O$ gas mixture on the vapor density of $V_2O_5$.

FIG. 7 is a graph illustrating effect of $P_{H_2O}$ ($O_2$-$H_2O$-$SO_2$-$SO_3$ gas mixture) on the volatilization of vanadium from $Na_2SO_4$-$Na_2V_2O_6$-$V_2O_5$ melts.

FIG. 8 is a graph illustrating effect of $P_{H_2O}$ ($O_2$-$H_2O$-$SO_2$-$SO_3$ gas mixture) on the volatilization of vanadium from $Na_2SO_4$-$Na_2V_2O_6$-$V_2O_5$ melts.

FIG. 9 is a schematic illustration representation of vanadium volatilization using a steam film cooling process.

DETAILED DESCRIPTION OF THE INVENTION

A more particular description of the invention briefly described above will be rendered by reference to specific embodiments thereof that are illustrated in the appended drawings. Understanding that these drawings depict only typical embodiments of the invention and are not therefore to be considered to be limiting of its scope, the invention will be described and explained.

The major vanadium containing gaseous oxides under turbine conditions are $V_2O_5$ and $V_4O_{10}$. Yannoupoulos observed that the vapor pressure of vanadium hydroxide was very much greater than that of the oxides in $O_2$-$H_2O$ mixtures with $P_{H_2O}$ greater than about 0.1 atm. At the reduced activities of $V_2O_5$ expected in condensates (due to association with $Na_2O$), the vanadium hydroxide vapor pressure would predominate at even lower values of $P_{H_2O}$. This follows directly from the individual reactions since:

$$P_{VO(OH)_3}{}^i$$

is proportional to $(a_{V_2O_5})^{1/2}$, the vapor pressure of vanadium hydroxide ($VO(OH)_3$) is proportional to the square root of vanadium oxide activity $(a_{V_2O_5})^x$, where x equals 1 for $V_2O_5$ and 2 for $V_4O_{10}$. Thus, vanadium hydroxide is expected to be the major vanadium containing gaseous species in the first stage region of the turbine where $P_{H_2O}$ is greater than 0.1 atm.

The formation of VO(OH)$_3$ can be described by the reaction:

$$\underline{V_2O_5}(l) + 3H_2O(g) = 2V0(OH)_3(g) \qquad (1)$$

The line below V$_2$O$_5$ indicates that the vanadium oxide can exist in solution at less than unit activity. An increase in water vapor pressure (P$_{H_2O}$) would increase the vapor pressure of vanadium compounds and thereby reduce the amount of vanadium in the condensate. Thus, it should be possible to safely use fuels containing higher vanadium impurities by increasing P$_{H_2O}$ in the combustion gases.

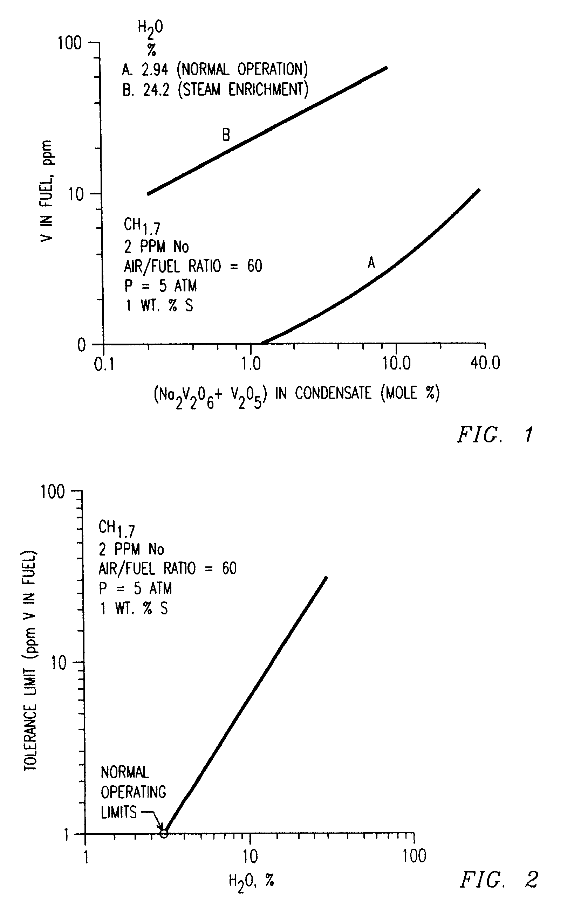

Thermodynamic calculations have been conducted by the inventors to support this postulate. With respect to FIG. 1, the graph shows the effect of water vapor on the condensate composition at 900˚C. For example, for a fuel containing 10 ppm vanadium, the combined sodium vanadate and V$_2$O$_5$ content of the condensate can be reduced from about 36 mole % to about 0.2 mole % by increasing the steam content in the combustion gases from about 3% for normal operation to about 24%.

In addition, FIG. 2 provides a graphic illustration of the effect of water vapor on the allowable fuel level of vanadium (tolerance limit) to maintain the same total concentration of vanadium in the deposit. For example, if the concentration of H$_2$O in the gas stream is increased from about 3% to 24%, the concentration of vanadium in the condensate obtained at 900˚C from a fuel containing about 23 ppm vanadium (V) would be about the same as that from a fuel containing 1 ppm V for no enrichment in H$_2$O. Thus, the tolerance limit is increased from 1 ppm to 23 ppm under these conditions.

Laboratory experiments have been carried out to study the volatilization of vanadium from pure V$_2$O$_5$ and Na$_2$V$_2$O$_6$-V$_2$O$_5$-Na$_2$SO$_4$ mixtures in the presence of steam. The vapor pressure of vanadium compounds was measured by a transpiration technique. When a carrier gas containing H$_2$O vapor is passed over vanadium-containing melts at high temperature, the weight of the salt changes due to a loss of vanadium as result of the formation of vanadium hydroxide. Vanadium compounds condense in the cooler parts of the tube due to a decrease in their volatility at lower temperatures. The vapor density of vanadium in the gas stream can be determined by measuring the weight change of the melt as a function of time or by analyzing for the vanadium content of the condensed material.

Volatilization of vanadium from pure V$_2$O$_5$ was studied using oxygen as the carrier gas. However, for volatilization experiments over Na$_2$V$_2$O$_6$-Na$_2$SO$_4$ melts, O$_2$-SO$_2$ mixtures providing SO$_3$ levels typical of gas turbine operating conditions were used. The SO$_2$-O$_2$ mixture fixes the equilibrium activity of V$_2$O$_5$ in the melt.

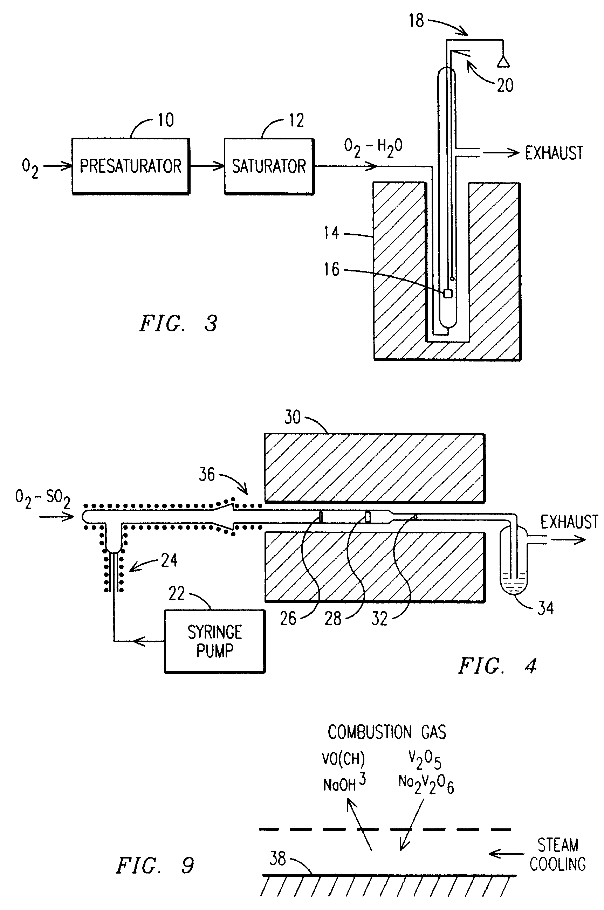

Two kinds of experimental arrangements shown in FIGS. 3 and 4 were used. In the arrangement shown in FIG. 3, P$_{H_2O}$ in the O$_2$-H$_2$O mixture was controlled by passing O$_2$ first through a water presaturator 10, maintained at a few degrees above the desired temperature, and then through a saturator 12 filled with glass beads at the desired temperature. The glass beads provide a large surface area for equilibration of the gas. The entire section of glass tubing between the presaturator and the furnace tube 14 was heated to above 100˚C to avoid condensation of H$_2$O. The O$_2$-H$_2$O mixture was passed over the salt mixture suspended in a crucible 16 from the arm of a Cahn thermogravimetric balance 18. A thermocouple 20 was provided to monitor or estimate the temperature of the crucible 16. Measurements of the steady state rate of weight loss from the V$_2$O$_5$ sample provided the vanadium saturation limit of the gas stream. The experiments, however, had some uncertainties due to steep temperature gradients in the furnace tube and relatively poor ( $\pm$ 4˚c) temperature control.

The experimental arrangement shown in FIG. 4 was used for volatilization studies on Na$_2$V$_2$O$_6$-Na$_2$SO$_4$-V$_2$O$_5$ melts. The volatilization experiments were carried out in O$_2$-SO$_2$-SO$_3$-H$_2$O gas mixtures over a range of water vapor pressures (0-0.83 atm.). The required amount of water vapor was obtained using a syringe pump 22 to inject a controlled flow rate of liquid water through a heated thin capillary 24 of about 0.5 mm internal diameter. The equilibrium value of P$_{SO_3}$ was attained by passing the O$_2$-SO2-H$_2$O gas mixture over a platinum catalyst 26. The specimen and catalyst were controlled at the same temperature to within $\pm$2˚C. After passing over the melt placed in a platinum crucible 28 in the wider section (12 mm i.d.) of the quartz tube 36 (disposed within a furnace 30), the gas mixture passed through the narrow section (6 mm i.d.) where vanadium oxide and vanadyl sulfate condensed (designated with number 32) on the cooler parts. The cooled gas mixture was finally led through a bubbler 34 to the exhaust. After the experiment was over, the condensate in the cooler parts of the tube was dissolved in dilute HF and analyzed for vanadium content.

Results and Discussion

Pure V205:

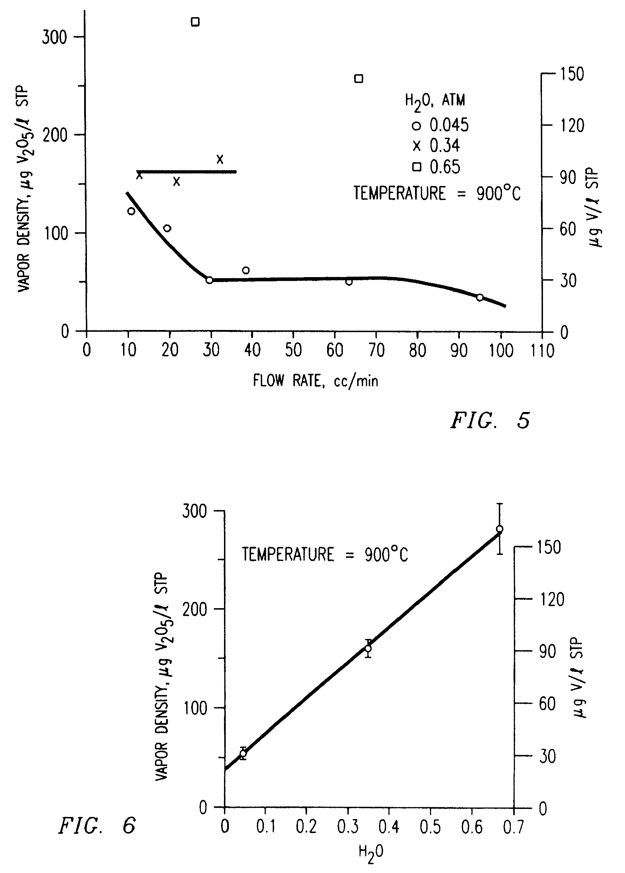

Volatilization of vanadium from pure V$_2$O$_5$ was studied at 900˚C as a function of gas flow rate and P$_{H_2O}$ FIG. 5 shows the dependence of vapor density on gas flow rate. Vapor density (v) was obtained from the steady state weight loss rate by the following relation:

$$\text{vapor density (µg of } V_2O_5/\text{litre of gas at STP})$$
$$= \frac{\text{steady state weight loss rate (ug/min)} \times 1000 \times \underline{298}}{\text{flow rate (cc/mm)} \qquad\qquad 273}$$

The curve for $P_{H_2O} = 0.045$ illustrates typical effects of varying flow rates. At low flow rates, an erroneously high vapor density is obtained because vapor diffusion from the sample to the cooler sections of the tube contributes significantly to the volatilization rates. At high flow rates, evaporation is too slow to saturate the gas, and an apparently low vapor pressure or vapor density is obtained. The intermediate (plateau) region gives the true equilibrium vapor density. A plot of the results as a function of $P_{H_2O}$ is shown in FIG. 5. Yannoupoulos observed a vapor density of 65 ug V/litre (STP) for $P_{H_2O} = 0.6$ at 900˚C, which is in reasonably good agreement with the present value (from FIG. 5) of 140 ug V/litre (STP). It can be seen that the vapor density (or the vapor pressure of vanadium containing species) increases almost linearly with $P_{H_2O}$. However, due to the narrow range over which the vapor density was independent of flow rate (FIG. 5), poor control of specimen temperature, and small number of experiments, considerable uncertainty may be associated with the pressure dependence shown. In FIG. 6. Further volatilization experiments were carried out with $Na_2SO_4$-$Na_2V_2O_6$-$V_2O_5$ mixtures because of their greater relevance to turbine operation.

### $\underline{Na_2SO_4\text{-}Na_2V_2O_6V_2O_5}$ mixtures

Equilibration Experiments: When a $Na_2V_2O_6$-$Na_2SO_4$ melt is exposed to $O_2$-$SO_2$ environments, the salt gains weight as some of the sodium vanadate is converted to $V_2O_5$. Thermodynamic calculations show that the amount of higher order vanadates ($Na_4V_2O_7$, $Na_6V_2O_8$) would he small. The equilibrium between the gas mixture and the melt can be expressed as:

$$\underline{Na_2V_2O_6}\,(l) + SO_3(g) = \underline{Na_2SO_4}(l) + \underline{V_2O_5}(l) \qquad\qquad (2)$$

In volatilization experiments, $Na_2V_2O_6$-$Na_2SO_4$ salts were pre-equilibrated with the gas mixture containing the desired level of $P_{SO_3}$ The equilibrium composition of the condensate was determined from the weight gain of the salt mixture during equilibration. Table I gives the results of experiments at 750˚C and 900˚C. However, the combustion product temperature may range from about 600˚C to about 1100˚C. The activity of $V_2O_5$ was calculated from the final composition of the melt, assuming activity coefficient values of one for $Na_2SO_4$ and $Na_2V_2O_6$ and using existing thermodynamic data for $Na_2V_2O_6$, $V_2O_5$ and $Na_2SO_4$.

Volatilization Studies: A number of factors are important in volatilization studies from multi-component melts such as those containing $Na_2V_2O_6$, $V_2O_5$, and $Na_2SO_4$:

(1) More than one vapor species may have significant vapor pressures; (2) The loss of components at different rates, e.g., the predominant loss of $V_2O_5$ from $Na_2SO_4$-$Na_2V_2O_6$-$V_2O_5$ mixtures, means that the overall composition of the melt changes with time. This difficulty can be circumvented experimentally by using a large quantity of melt and making measurements over a short time span where the overall composition of the melt stays essentially constant; (2) In the presence of a gas that reacts with the melt, e.g., $SO_3$ with $Na_2V_2O_6$-$Na_2SO_4$-$V_2O_5$ melt (as in reaction 2), additional weight changes will result even if the bulk composition of the melt stays nearly constant over the duration of experiment; and, (3) In addition to gas phase mass transport limitations that restrict experiments to a maximum flow rate for gas saturation, mass transfer inside the melt may also affect the vaporization kinetics. If mass transfer in the melt is slow relative to vaporization, composition gradients will arise both from the loss of a component and the ingress of compensating gaseous species. Thus, the activity of the evaporating species at the surface may be different from that corresponding to the bulk composition. This problem can be reduced by carrying out experiments at low flow rates so that the volatilization rates are small, but other limitations may arise; for example, the diffusion of vanadium species away from the sample may be faster than the flow of the bulk gas such that an apparently high vapor density is obtained.

An attempt was made to measure by weight changes (for the set up shown in FIG. 3) the rate of volatilization from a $Na_2SO_4$-$Na_2V_2O_6$-$V_2O_5$ melt in an $O_2$-$SO_2$ environment. The experiments were started with $Na_2SO_4$-50 mole % $Na_2V_2O_6$ ($Na_2SO_4$-66.6% mole $NaVO_3$). After an initial period of equilibration with the gas (see reaction 2), the melt experienced a net weight loss which is the result of three major processes which are separate, but related:

$$\text{Net weight loss} \quad = \text{volatilization of } V_2O_5 + \text{volatilization of } Na_2SO_4 \\ - \text{ weight gain due to } SO_3$$

Corrections for weight loss due to the evaporation of $Na_2SO_4$ are available from existing vapor pressure data and known to those skilled in the art. If the diffusion rate inside the melt is much faster than the volatilization rate, there would be no concentration gradients in the melt and from equation (2) above:

$$\text{weight gain due to } SO_3 = \frac{80}{182} \text{ x weight loss due to } V_2O_5 \text{ volatilization,}$$

and the melt should lose weight at a steady rate.

Analysis of the experimental data showed that the melt did not lose weight steadily and that diffusion inside the melt was affecting the process. As a result, the rate of weight change varied with time, and it was not possible to correct accurately for the weight change due to $SO_3$ pickup by the melt. It was concluded that weight change measurements could not be used to obtain meaningful volatilization rates of vanadium from $Na_2SO_4$-$Na_2V_2O_6$-$V_2O_5$ melts.

The experimental arrangement shown in FIG. 4 was adopted as an alternative. Volatilization rates obtained by chemical analysis of condensates in the cooler section of the tube need no correction for the rate of $Na_2SO_4$ loss or weight gain due to $SO_3$ reaction. However, since the rate of volatilization is affected both by flow rate and by the activities of $V_2O_5$ and $Na_2SO_4$ at the surface, which in turn are affected by gas/melt reactions and by interdiffusion in the melt, a flow-rate- independent region may not be obtained.

Table I below gives the results of experiments at 750 and 900°C.

Table I Volatization Studies with $Ns_2SO_4$-$V_2O_5$-$Na_2V_2O_6$

| Gas Mixture | $P_{H_2O}$ | Total flow rate at room temp. (cc/min.) | Temp.° C | Equilibrium $P_{SO_3}$ | Reaction Time (Hours) | Total Vanadium Loss (ug) | Vapor Density (ug V/litre of gas at STP |
|---|---|---|---|---|---|---|---|
| | | | | | | | |
| $O_2$ + 0.15%$SO_2$ | 0.0 | 50 | 750 | 8.7 | 24 | < 6 | < 0.09 |
| $O_2$ + 0.2% $SO_2$ | 0.21 | 50 | 750 | 8.7 | 57 | 145 | 0.93 |
| $O_2$ + 0.2% $SO_2$ | 0.17 | 55 | 750 | 9.3 | 66 | 185 | 0.92 |
| $O_2$ + 0.4% $SO_2$ | 0.55 | 50 | 750 | 8.7 | 41 | 675 | 6.00 |
| $O_2$ + 2% $SO_2$ | 0.87 | 50 | 750 | 8.7 | 24 | 602 | 9.13 |
| $O_2$ + 2% $SO_2$ | 0.87 | 50 | 750 | 8.7 | 23.5 | 625 | 9.68 |
| $O_2$ + 0.15%$SO_2$ | 0.0 | 50 | 900 | 3.7 | 48 | < 6 | < 0.05 |

(continued)

| Gas Mixture | $P_{H_2O}$ | Total flow rate at room temp. (cc/min.) | Temp.° C | Equilibrium $P_{SO_3}$ | Reaction Time (Hours) | Total Vanadium Loss (ug) | Vapor Density (ug V/litre of gas at STP |
|---|---|---|---|---|---|---|---|
| $O_2$ + 0.2% $SO_2$ | 0.188 | 50 | 900 | 3.7 | 50 | 105 | 0.76 |
| $O_2$ + 0.2% $SO_2$ | 0.188 | 50 | 900 | 3.7 | 41.75 | 65 | 0.57 |
| $O_2$ + 0.2% $SO_2$ | 0.188 | 100 | 900 | 3.7 | 23.75 | 82 | 0.63 |
| $O_2$ + 0.2% $SO_2$ | 0.188 | 180 | 900 | 3.7 | 21.75 | 110 | 0.51 |
| $O_2$ + 0.4% $SO_2$ | 0.505 | 50 | 900 | 3.7 | 22 | 135 | 2.24 |
| $O_2$ + 2% $SO_2$ | 0.84 | 50 | 900 | 3.7 | 23.25 | 270 | 4.23 |

Most of the experiments were performed at a total gas flow rate of 50 cc/min. it can be seen from the results at 900°C that under these experimental conditions the gas flow rate had very little effect on volatilization rates.

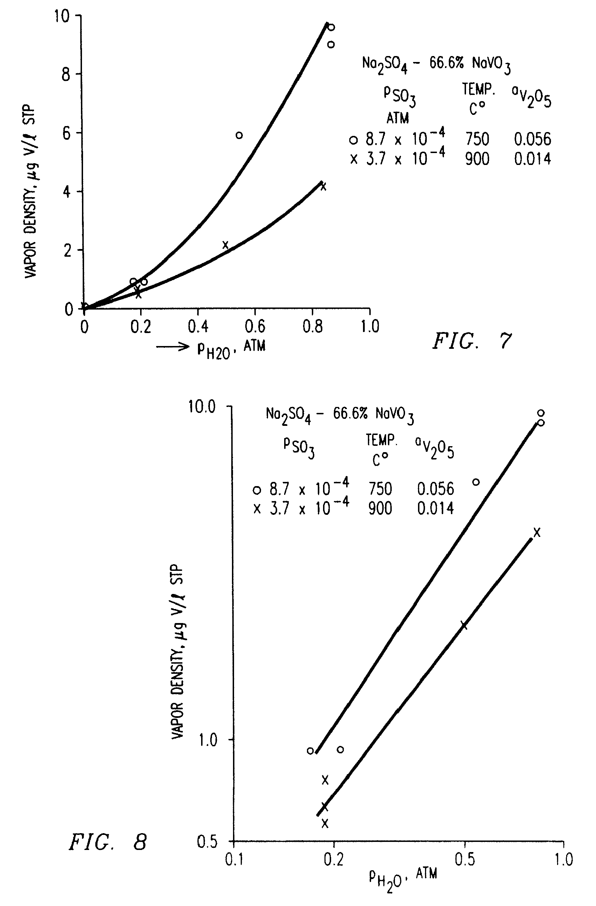

With respect to FIG. 7 there is graphically shown the inferred values of vapor densities as a function of $P_{H_2O}$. It is clear that the vapor density of vanadium increases with $P_{H_2O}$. Since the vapor density of vanadium should increase with increasing activity of $V_2O_5$ (reaction 1), the higher vapor density of vanadium at 750°C than at 900°C (the combustion product temperature may be between about 600°C to about 1100°C) is expected as a result of the higher activity of $V_2O_5$ in the melt, as referenced in Table II below.

Table II Equilibration of $Na_2SO_4$-50% $Na_2V_2O_6$ mixtures in $O_2$-0.15% $SO_2$

| Temp.°C | $P_{SO_3}$ | Weight of starting mixture (mg) | Weight gain (mg) | Final X $Na_2 SO_4$ | Composition X $V_2O_5$ | X $Na_2V_2O_6$ | Calculated a $V_2O_5$ |
|---|---|---|---|---|---|---|---|
| 750 | $8.74 \times 10^{-4}$ | 199.7 | 36.7 | 0.654 | 0.307 | 0.04 | 0.0565 |
| 900 | $3.65 \times 10^{-4}$ | 462.5 | 41.0 | 0.583 | 0.252 | 0.252 | 0.0136 |

The agreement between the experimental vapor density data and the calculated vapor densities using Yannoupoulos' data is extremely good. The experimental vapor density at 750°C and $P_{H2O}$ = 0.5 atm. is 4 ug V/litre (STP) compared to a value of 3 ug V/litre (STP) obtained by using Yannoupoulos' data and the activity of $V_2O_5$ in table I. Furthermore, for the calculations in FIGS. 1 and 2, $VO(OH)_3$ was assumed to be the predominant vanadium containing gaseous species in the presence of steam; a log-log plot of the experimental vanadium vapor density (FIG. 8) as a function of $P_{H_2O}$ shows that the vapor density increases linearly with $(P_{H_2O})^{1.5}$, which is consistent with $VO(OH)_3$ being the predominant vanadium containing gaseous species.

The theoretical calculations and laboratory experiments discussed above show that by injecting steam into the combustion product atmosphere it should be possible to increase the volatility of vanadium to allow the use of fuels containing higher vanadium levels. To increase the overall $P_{H_2O}$ of the combustion gas to effective levels would, however, require unacceptably large quantities of steam. A more practical solution may be to introduce steam locally, where the condensation (and corrosion) problems are encountered. Presently the hot stage components , such as shrouds, blades and vanes of many turbines have air-film cooling. If air cooling is replaced by steam cooling (or air containing steam) a high $P_{H_2O}$ would be attained locally at the surface of the blade, and the condensate would be expected to have a reduced vanadium content.

An embodiment of the invention is shown schematically in FIG. 9. $V_2O_5$ and $Na_2V_2O_6$ reaching the blade 38 surface will tend to volatilize in the form of vanadium hydroxide and NaOH by reactions (1) and (3):

$$Na_2V_2O_6(l) + 4H_2O(g) = 2VO(OH)_3(g) + 2NaOH(g) \qquad (3)$$

In addition to the vanadium volatilization, steam should give better cooling of the blades in comparison to air because of its higher specific heat and thermal conductivity. This approach appears to be directly applicable to present turbines where the blades or vanes have air-film cooling with an add-on system for steam generation. The laboratory experiments with $P_{H_2O}$ up to 0.83 atmosphere demonstrate the feasibility of the above approach.

While the preferred embodiments of the present invention have been shown and described herein, it will be obvious that such embodiments are provided by way of example only and not of limitation. Numerous variations, changes and substitutions will occur to those skilled in the art without departing from the teaching of the present invention. For example, if the combustion of the fuel is performed by oxygen or oxygen-enriched air, the concentration and vapor pressure of the water vapor will be higher, and the vanadium tolerance limit will be higher. Accordingly, it is intended that the invention be interpreted within the full scope of the appended claims.

For completeness, various aspects of the invention are now set out in the following numbered clauses:

1. A method of operating a gas turbine that utilizes vanadium-containing fuels at a combustion stage of the turbine thereby producing a combustion product having vanadium gaseous species, the method comprising:

increasing the volatility of the vanadium gaseous species in the combustion product atmosphere generated in a combustor of the turbine by increasing concentration of water vapor in the combustion product.

2. A method of operating a gas turbine that utilizes vanadium-containing fuels at a combustion stage of the turbine thereby producing a combustion product having vanadium gaseous species, the method comprising:

increasing the vapor pressure of the vanadium gaseous species in a combustion product atmosphere generated in a combustor of the turbine by increasing the water vapor pressure of the combustion product.

3. The method of clause 2, wherein increasing the water vapor includes introducing water vapor to the combustion product at a predetermined temperature and vapor pressure.

4. The method of clause 3, wherein the concentration of water in the combustion product is from about 10% to about 50% by volume with the introduction of the water vapor.

5. The method of clause 3, wherein the concentration of water in the combustion product may range from about 20% to about 40% by volume with the introduction of the water vapor.

6. The method of clause 3, wherein water vapor is introduced to the combustion product at a temperature ranging from about 600˚C to about 1100˚C.

7. The method of clause 6, wherein the concentration of water in the combustion product may range from about 20% to about 40% by volume with the introduction of the water vapor.

8. The method of clause 3, wherein water vapor is introduced to the combustion product at a temperature of about 750˚C to 1000˚C.

9. The method of clause 8, wherein the concentration of water in the combustion product may range from about 20% to about 40% by volume with the introduction of the water vapor.

10. The method of clause 2, wherein the water vapor pressure of the combustion product is increased directly at a hot stage component such as shroud, vanes, and blades by injecting a water vapor into the turbine element.

11. The method of clause 2, wherein the gas turbine includes a combustor for generating the combustion product that is injected into a turbine element and the step of introducing the water vapor includes introducing the water vapor at the combustor before the combustion product reaches the turbine element.

12. The method of clause 2, further comprising recovering steam and combustion product from the turbine, condensing the steam and combustion products to liquid form, removing impurities from the liquid form and heating the liquid to form steam that is introduced to combustion product for the turbine that has not been combined with water vapor.

13. The method of clause 2, further comprising using a source of liquid oxygen that is injected into a combustor of the gas turbine to produce the combustion product.

14. The method of clause 13, further comprising recovering steam and combustion product from the turbine, condensing the steam and combustion products to liquid form, removing impurities from the liquid form and heating the liquid to form steam that is introduced to combustion product for the turbine that has not been combined with water vapor.

15. The method of clause 14, wherein the water vapor pressure of the combustion product is increased at a stage where the combustion product is injected into a turbine hot stage component such as rotary blades, shroud or vanes.

16. The method of clause 14, wherein the gas turbine includes a combustor for generating the combustion product that is injected into a turbine element and the step of introducing the water vapor includes introducing the water vapor at the combustor before the combustion product reaches the turbine element.

17. The method of clause 2, wherein the vanadium limit of the fuel for the gas turbine is increased by a factor of approximately $10^{1.5}$ by increasing the water vapor concentration by a factor of 10..

18. A gas turbine power generation system having a combustor that produces a combustion product that is introduced into a turbine element having a plurality of rotary blades, wherein a vanadium-containing fuel is used at the combustor to produce the combustion product, the system comprising:

a water vapor source in fluid communication with the turbine power generation system for the introduction of the water vapor to the combustion product to increase a concentration of water vapor in the combustion product and reduce condensation of vanadium gaseous species on to the blades in the turbine element.

19. The gas turbine system of clause 18, wherein the water vapor source is in fluid communication with a combustor for introduction of the water vapor to the combustion product.

20. The gas turbine system of clause 18, wherein the water vapor source is in fluid communication with the turbine element such as hot stage component as rotary blades, shrouds or vanes for introduction of the water vapor to the combustion product.

21. The gas turbine system of clause 18, wherein the water vapor is introduced to the combustion at some point on the system prior to the combustion product reaching the turbine element.

22. The gas turbine system of clause 18, wherein the water vapor source comprises a closed loop system in fluid communication with the turbine element comprising one or more conduits for directing water vapor and combustion products from the turbine element to a condenser to condense the water vapor and production products to liquid, then to a heater to heat the liquid and form water vapor that is introduced into the turbine element.

**Claims**

1. A method of operating a gas turbine that utilizes vanadium-containing fuels at a combustion stage of the turbine thereby producing a combustion product having vanadium gaseous species, the method comprising:

increasing the volatility or vapor pressure of the vanadium gaseous species in the combustion product atmosphere generated in a combustor of the turbine by increasing concentration of water vapor or the water vapor pressure in the combustion product.

2. The method of claim 1, wherein increasing the water vapor includes introducing water vapor to the combustion product at a predetermined temperature and vapor pressure.

3. The method of any preceding claim, wherein the concentration of water in the combustion product is from about 10% to about 50% by volume with the introduction of the water vapor.

4. The method of any preceding claim, wherein water vapor is introduced to the combustion product at a temperature ranging from about 600˚C to about 1100˚C.

5. The method of any preceding claim, wherein water vapor is introduced to the combustion product at a temperature of about 750˚C to 1000˚C.

6. The method of any preceding claim, wherein the concentration of water in the combustion product may range from about 20% to about 40% by volume with the introduction of the water vapor.

7. The method of any preceding claim, wherein the water vapor pressure of the combustion product is increased directly at a hot stage component such as shroud, vanes, and blades by injecting a water vapor into the turbine element.

8. The method of any preceding claim, wherein the gas turbine includes a combustor for generating the combustion product that is injected into a turbine element and the step of introducing the water vapor includes introducing the water vapor at the combustor before the combustion product reaches the turbine element.

9. The method of any preceding claim, further comprising recovering steam and combustion product from the turbine, condensing the steam and combustion products to liquid form, removing impurities from the liquid form and heating the liquid to form steam that is introduced to combustion product for the turbine that has not been combined with water vapor.

10. The method of any preceding claim, further comprising using a source of liquid oxygen that is injected into a combustor of the gas turbine to produce the combustion product.

11. The method of any preceding claim, further comprising recovering steam and combustion product from the turbine, condensing the steam and combustion products to liquid form, removing impurities from the liquid form and heating the liquid to form steam that is introduced to combustion product for the turbine that has not been combined with water vapor.

12. The method of any preceding claim, wherein the water vapor pressure of the combustion product is increased at a stage where the combustion product is injected into a turbine hot stage component such as rotary blades, shroud or vanes.

13. The method of any preceding claim, wherein the gas turbine includes a combustor for generating the combustion product that is injected into a turbine element and the step of introducing the water vapor includes introducing the water vapor at the combustor before the combustion product reaches the turbine element.

14. The method of any preceding claim, wherein the vanadium limit of the fuel for the gas turbine is increased by a factor of approximately $10^{1.5}$ by increasing the water vapor concentration by a factor of 10..

15. A gas turbine power generation system having a combustor that produces a combustion product that is introduced into a turbine element having a plurality of rotary blades, wherein a vanadium-containing fuel is used at the combustor to produce the combustion product, the system comprising:

    a water vapor source in fluid communication with the turbine power generation system for the introduction of the water vapor to the combustion product to increase a concentration of water vapor in the combustion product and reduce condensation of vanadium gaseous species on to the blades in the turbine element.

FIG. 1

FIG. 2

$O_2 \rightarrow$ PRESATURATOR $\boxed{10}$ SATURATOR $\boxed{12}$ $O_2 - H_2O \rightarrow$ EXHAUST

18

20

14

16

*FIG. 3*

30

36

$O_2 - SO_2 \rightarrow$

24

22 SYRINGE PUMP

26  28  32

34

EXHAUST

*FIG. 4*

COMBUSTION GAS

VO(CH)         $V_2O_5$
NaOH³        $Na_2V_2O_6$

STEAM
COOLING

38

*FIG. 9*

*FIG. 5*

*FIG. 6*

FIG. 7

FIG. 8

Europäisches
Patentamt

European
Patent Office

Office européen
des brevets

## EUROPEAN SEARCH REPORT

Application Number

EP 09 17 9162

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 359 723 A (BOHENSKY GEORGE R ET AL) 26 December 1967 (1967-12-26) * column 1, line 64 - column 4, line 33; figure 1 * | 1-3,6, 8-14 | INV. F02C3/30 F01K21/04 |
| X | GB 2 187 273 A (EDISS BERNARD GEORGE) 3 September 1987 (1987-09-03) * page 1, line 47 - page 4, line 11; figures 1-4 * | 1,2 | |
| A | EP 1 522 695 A1 (GRIFFIN ARTHUR T JR [US]) 13 April 2005 (2005-04-13) * column 5, paragraph 25 - column 9, paragraph 37; figure 4 * | 1 | |
| A | EP 1 342 771 A1 (HITACHI LTD [JP]) 10 September 2003 (2003-09-10) * claim 2 * | 4 | |
| A | GB 2 403 272 A (ROLLS ROYCE PLC [GB]) 29 December 2004 (2004-12-29) * page 5, line 29 - page 6, line 26 * | 7 | TECHNICAL FIELDS SEARCHED (IPC) F02C F01K |

The present search report has been drawn up for all claims

| Place of search | Date of completion of the search | Examiner |
|---|---|---|
| Munich | 5 May 2010 | Rau, Guido |

EPO FORM 1503 03.82 (P04C01)

## ANNEX TO THE EUROPEAN SEARCH REPORT
## ON EUROPEAN PATENT APPLICATION NO.

EP 09 17 9162

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2010

| Patent document cited in search report | | Publication date | Patent family member(s) | | Publication date |
|---|---|---|---|---|---|
| US 3359723 | A | 26-12-1967 | DE | 1476765 A1 | 23-10-1969 |
| | | | GB | 1140757 A | 22-01-1969 |
| | | | LU | 52258 A1 | 28-12-1966 |
| GB 2187273 | A | 03-09-1987 | NONE | | |
| EP 1522695 | A1 | 13-04-2005 | NONE | | |
| EP 1342771 | A1 | 10-09-2003 | JP | 3724438 B2 | 07-12-2005 |
| | | | JP | 2003261881 A | 19-09-2003 |
| | | | US | 2003168381 A1 | 11-09-2003 |
| | | | US | 2007144941 A1 | 28-06-2007 |
| GB 2403272 | A | 29-12-2004 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. D. Halstead.** Deposition and Corrosion in Gas Turbines. J. Wiley, 1972, 22
- **W. D. Halstead.** *J. Inst. of Fuel,* 1969, vol. 42, 419
- **N. S. Bornstein ; M. A. DeCrescente.** Properties of High Temperature Alloys. *The Electrochemical Society,* 1976, 626
- **O. Glemser ; A. Müller.** *Z. Anorg. Allgem. Chem.,* 1963, vol. 325, 220
- **L. N. Yannoupoulos.** *J. Phys. Chem.,* 1968, vol. 72, 3293
- **M. Taniguchi ; M. Ooue.** *23rd Annual Conf. of the Chem. Soc. of Japan,* 1970, 1112
- **H. Suito ; D. R. Gaskell.** Metal-Slag-Gas Reactions and Processes. *The Electrochemical Society,* 1975, 251